# DEMANDE DE BREVET EUROPEEN

(11) **EP 0 994 543 A1**
(43) Date de publication de la demande: **19.04.2000**
(21) Numéro de dépôt: 99402336.4
(22) Date de dépôt: 23.09.1999
(51) Int. Cl.: H02B 7/08

(54) **Dispositif de protection à l'immersion pour armoire électrique escamotable dans le sol**

(30) Priorité: 14.10.1998 FR 9812870
(71) Demandeur: Alstom France SA, 75116 Paris (FR)
(72) Inventeur: Baeza, Jean-Michel, 34 150 Saint Jean de Fos (FR)
(74) Mandataire: Gosse, Michel

(57) **Abrégé**

Dispositif de protection pour armoire (7) de logement d'organes (6), notamment électriques, prévue escamotable à l'intérieur d'une fosse (2) ménagée dans le sol, depuis une position hors fosse et module d'équipement doté d'un tel dispositif. Une cloche de protection (8), qui a une ouverture (9) à sa base, forme ou contient un corps d'armoire où les organes d'équipement à protéger sont installés en retrait par rapport à l'ouverture. Cette cloche est montée sur un support mobile (10) de manière que l'ouverture à la base de la cloche soit orientée vers le bas, au moins lorsque la cloche est en position escamotée dans la fosse, pour enfermer une poche d'air où les organes sont maintenus hors d'eau, si la cloche se trouve immergée.

## Description

L'invention concerne un dispositif de protection à l'immersion pour armoire, de logement d'organes, notamment électriques, prévue escamotable dans une fosse aménagée dans le sol et un module d'équipement doté d'un tel dispositif. L'encombrement au sol des lieux soumis au passage des personnes et des véhicules, par exemple en milieu urbain, conduit les responsables chargés de la gestion de ces lieux à essayer de limiter à l'indispensable les nouvelles implantations de matériel en surface, en particulier si celles-ci ne sont pas exploitées en permanence. Ceci a conduit depuis longtemps à loger des équipements de distribution d'énergie, de télécommunication, de signalisation dans des fosses ménagées dans le sol auxquelles il est possible d'accéder depuis la surface. Toutefois, une telle solution ne convient pas toujours, en particulier s'il est préférable ou indispensable qu'au moins une partie des équipements saille au-dessus du sol en phase d'exploitation.

Un problème particulier se pose dans le cas d'équipements exploités dans un lieu soumis à des contraintes de passage, telles qu'évoquées ci-dessus, ou encore d'esthétique, lorsque ces équipements sont utilisés de manière discontinue, par exemple périodique, et qu'il est préférable qu'ils soient laissés à demeure sur leur lieu d'utilisation. Un tel problème se pose par exemple pour les équipements de distribution électrique prévus sur l'emplacement d'un marché périodiquement installé sur une partie de voie publique.

Une solution à ce problème consiste à prévoir d'escamoter ces équipements dans des fosses, obturables, creusées dans le sol, ce qui permet de respecter les contraintes de passage et/ou d'esthétique imposées lorsqu'ils ne sont pas en exploitation.

Toutefois cette solution a pour inconvénient de soumettre les équipements escamotés dans les fosses au risque d'entrer en contact avec un liquide qui a ruisselé et où ces équipements peuvent éventuellement être noyés. Cet inconvénient peut ne pas être acceptable en particulier, lorsque les équipements concernés sont des équipements électriques.

L'invention propose donc un dispositif de protection à l'immersion pour armoire de logement d'organes d'équipement, notamment électriques, qui est prévue escamotable dans une fosse aménagée dans le sol, depuis une position haute, hors fosse.

Selon une caractéristique de l'invention, le dispositif comporte une cloche de protection qui a une ouverture à sa base, qui forme ou contient le corps de l'armoire où les organes d'équipement à protéger sont installés en retrait par rapport à l'ouverture et qui est montée sur un support mobile de manière que l'ouverture de la base de la cloche soit orientée vers le bas, au moins lorsque la cloche est en position escamotée dans la fosse, pour enfermer une poche d'air où les organes sont maintenus hors d'eau, si la cloche se trouve immergée. L'invention propose aussi un module d'équipement comportant une armoire de logement d'organes, notamment électriques, prévue escamotable à l'intérieur d'une fosse ménagée dans le sol, depuis une position haute, hors fosse. Selon une caractéristique de l'invention, ce module comporte une cloche de protection qui a une ouverture à sa base, qui forme ou contient le corps de l'armoire où les organes d'équipement à protéger sont installés en retrait par rapport à l'ouverture et qui est montée sur un support mobile de manière que l'ouverture de la base de la cloche soit orientée vers le bas, au moins lorsque la cloche est en position escamotée dans la fosse, pour enfermer une poche d'air où les organes sont maintenus hors d'eau, si la cloche se trouve immergée. L'invention, ses caractéristiques et ses avantages sont précisés dans la description qui suit en liaison avec les figures évoquées ci-dessous.

La figure 1 présente un alignement de deux modules d'équipement, selon l'invention, celui de devant étant présenté en coupe transversale et avec une cloche en position basse, escamotée dans une cuve logée dans une fosse, celui de derrière étant présenté avec une cloche en position haute, hors fosse. La figure 2 présente une coupe transversale d'un module d'équipement escamoté. La figure 3 présente une coupe transversale d'un module d'équipement en position haute avant basculement.

La figure 4 présente une coupe transversale d'un module d'équipement en position haute après basculement.

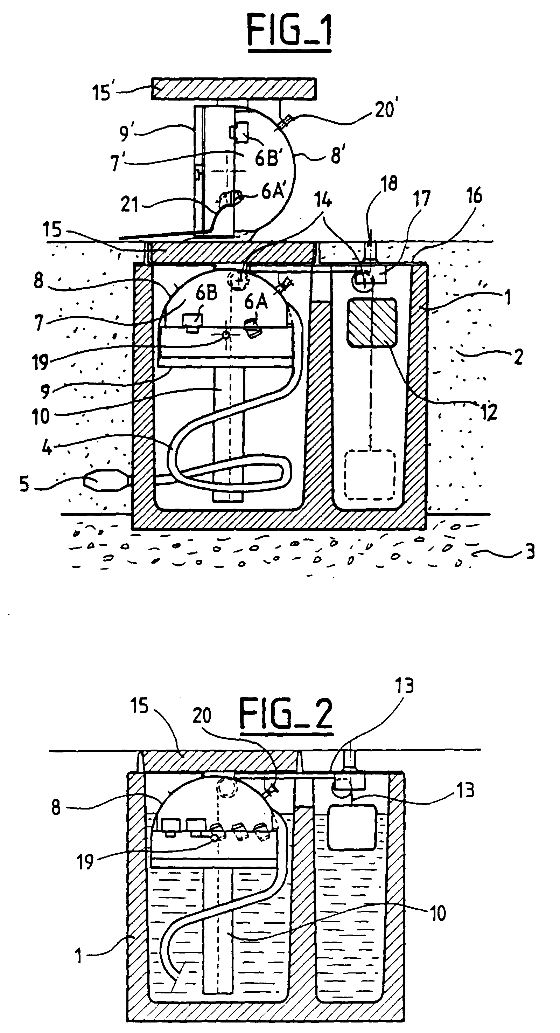

Pour montrer simultanément les deux positions possibles pour une armoire d'équipement escamotable de module d'équipement selon l'invention, l'agencement présenté sur la figure 1 est supposé constitué de deux modules d'équipement alignés l'un derrière l'autre selon un axe, non représenté, supposé perpendiculaire à la figure. L'armoire du module de l'équipement situé en arrière est visible en position haute, l'armoire du module de devant est montrée en position escamotée.

Chaque module d'équipement est destiné à être logé dans une fosse ménagée dans le sol. Dans l'exemple préféré de réalisation proposé, le module montré en coupe transversale comporte une cuve 1 que l'on vient placer dans une fosse 2 creusée pour lui dans le sol. Cette cuve est par exemple une cuve en matériau composite verre-ciment, elle est prévue pour permettre un écoulement vers l'extérieur du liquide qui est susceptible d'y pénétrer. Cet écoulement peut être réalisé par l'intermédiaire de conduits d'évacuation et/ou au travers d'une portion poreuse de paroi de cuve, la cuve est par exemple posée sur un lit 3 de matériau drainant. La cuve 1 comporte aussi au moins un passage pour conduit et/ou câble de desserte de l'équipement du module et par exemple un câble électrique 4 relié à un élément de jonction 5 logé dans le sol, à proximité de la cuve, pour l'alimentation du module.

L'équipement du module comporte une série d'organes 6 qui sont montés dans une armoire de logement 7 prévue escamotable dans la fosse 2 et donc ici dans la cuve 1. Cet escamotage s'effectue depuis une position haute, hors fosse, pour laquelle l'armoire est au moins partiellement au-dessus du sol. A titre d'exemple, l'armoire de logement 7' du module supposé en arrière sur la figure 1 est présentée en une telle position haute, hors fosse. Les organes 6, tels 6A, 6A', 6B, 6B' sont ici supposés être électriques, étant entendu que ceci n'est pas nécessairement le cas. Les organes 6A, 6A' sont par exemple des prises permettant le raccordement direct ou indirect d'un appareil extérieur. Ces prises sont alors conçues pour recevoir un élément de connexion débrochable complémentaire d'un appareil ou d'un câble ou conduit 21 de raccordement d'appareil. Comme connu, d'autres organes et d'autres raccordements, par exemple optiques ou fluidiques, peuvent être prévus au niveau d'une armoire d'un module d'équipement selon l'invention.

D'une manière générale, un module d'équipement selon l'invention est plus particulièrement prévu pour une armoire contenant des organes auxquels on cherche à éviter un contact avec du liquide et en particulier une immersion en cas de remplissage de la fosse par du liquide, par exemple par ruissellement ou en cas d'inondation.

Selon l'invention, il est prévu un dispositif de protection à l'immersion qui comporte une cloche de protection 8 qui forme ou contient le corps de l'armoire où les organes 6 à protéger sont installés. Suivant les réalisations, les équipements peuvent en effet être directement logés dans la cloche 8 ou dans un corps plus ou moins élaboré d'armoire qui est monté dans cette cloche. La cloche de protection 8 comporte une ouverture 9 à sa base, comme une cloche ordinaire, cette ouverture permettant d'accéder aux organes d'équipement 6. Elle reçoit aussi de manière étanche, le ou les câbles et/ou conduits qui desservent les organes, comme symbolisé par le câble 4. Cette desserte peut être prévue à des fins d'utilisation par les organes ou de distribution à des appareils externes au travers de ces organes.

La cloche 8 est prévue montée sur un support de façon à avoir son ouverture 9 orientée vers le bas, au moins lorsqu'elle est en position escamotée. L'air contenu dans la cloche ne peut alors s'échapper tant que l'ouverture reste orientée vers le bas, s'il arrive que la cloche se retrouve immergée dans un liquide, tel que de l'eau. Les organes d'équipement contenus dans la cloche sont alors maintenus hors d'eau, dans la poche d'air, comme schématisé sur la figure 2. Dans cet objectif et selon une forme préférée de réalisation, les organes d'équipement 6 à protéger sont montés dans la cloche en retrait par rapport à l'ouverture 9, comme on le voit notamment sur la figure 1.

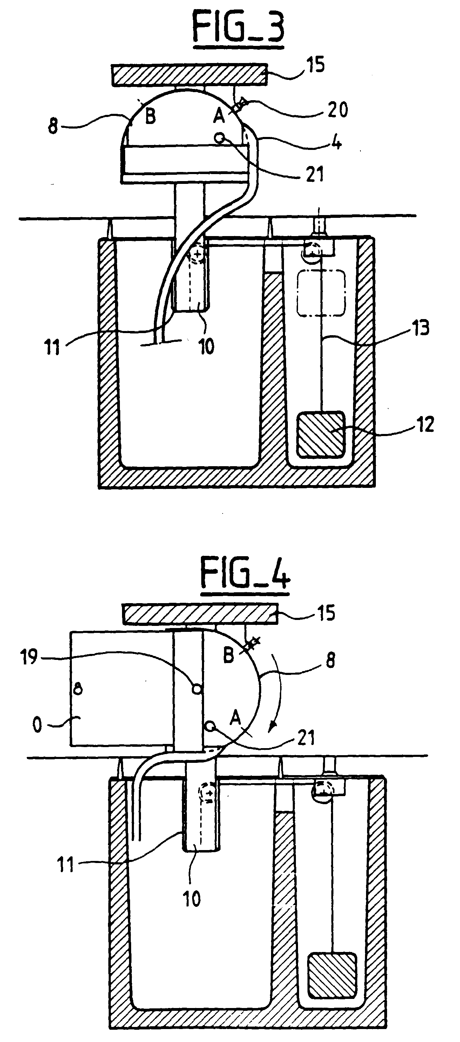

La cloche peut être réalisée sous différentes formes à partir du moment où elle permet l'emprisonnement d'une poche d'air suffisante pour maintenir hors d'eau les organes à protéger. Dans la réalisation présentée elle est réalisée sous la forme d'un boîtier à ouverture rectangulaire et à fond courbe et par exemple d'allure demi-cylindrique, comme montré pour les cloches à armoires 7 et 7' sur la figure 1. Une telle armoire peut éventuellement être équipée d'une porte 0 donnant accès aux organes qu'elle contient, comme illustré sur la figure 4. Des passages pour câble ou conduit peuvent être ménagés dans cette porte pour permettre sa fermeture tout en autorisant le passage des câbles ou conduits 21 amovibles de raccordement d'appareils extérieurs.

Dans la réalisation envisagée, le support sur lequel est montée la cloche, est un support mobile 10 qui permet de la déplacer d'une position haute, hors fosse, à une position basse d'escamotage et réciproquement Ce support 10 comporte par exemple un châssis qui se déplace au long de guides 11. Ces derniers sont ici montrés verticalement disposés dans la cuve 1.

Dans la forme de réalisation présentée, les déplacements verticaux de la cloche 8 avec son support 10 sont facilités par un système à contrepoids 12. Le contrepoids est ici en position haute dans la cuve, lorsque la cloche a été amenée en position escamotée par le châssis. Il se trouve en position basse, lorsque la cloche a été amenée en position haute, hors fosse par ce même châssis. A cet effet le châssis est relié au contrepoids par un système à câble(s) 13 et à poulies de renvoi 14. Celles-ci sont positionnées en haut de cuve, sous les éléments de couverture qui ferment la cuve à son sommet.

Dans la réalisation présentée, l'un des éléments de fermeture est un tampon amovible 15 qui vient fermer l'ouverture de cuve au travers de laquelle la cloche est amenée en position haute, hors fosse. Cette fermeture est réalisée lorsque la cloche est en position escamotée.

Un ou plusieurs autres éléments de fermeture 16 vienne(nt) fermer de manière permanente le reste du trou qui a du être réalisé pour placer la cuve 1 dans la fosse. L'ensemble de ces éléments 15 et 16 constitue une couverture de cuve positionnée au niveau du sol, lorsque la cloche est escamotée. L'élément fixe 16 illustré sur la figure 1 est supposé recouvert par le matériau constituant le sol où la fosse a été creusée. Dans l'exemple illustré, le tampon 15 est directement fixé sur le châssis du support mobile 10, au-dessus de la cloche qu'il surplombe et avec laquelle il se déplace verticalement.

Dans la réalisation présentée, il est prévu un verrouillage en position haute et en position basse de cloche par blocage en déplacement du châssis au moyen d'un mécanisme à serrure 17. Ce mécanisme agit par exemple par coincement d'un câble reliant le châssis au contrepoids ou par coincement d'une poulie, il est ici supposé commandé de l'extérieur au travers d'un orifice 18 pour clé ménagé dans le sol.

Il est possible de réaliser un module d'équipement comportant une cloche dont l'ouverture est toujours orientée vers le bas, tant en position escamotée qu'en position haute, hors fosse. Une telle solution est envisageable s'il n'est pas, ou pas souvent, nécessaire d'accéder aux organes d'équipement contenus dans la cloche et notamment si celle-ci peut facilement être démontée. Une telle solution est également possible si l'espace ménagé entre l'ouverture de cloche et le sol permet d'accéder aux organes, en position haute de cloche, ou au moins à ceux d'entre eux pour lesquels cela est indispensable.

Toutefois, dans une forme préférée de réalisation, la cloche est articulée sur le support mobile 10 qui la porte pour faciliter l'accès aux organes 6 qu'elle contient et plus particulièrement à ceux qui sont situés en façade à proximité de l'ouverture. Ces organes en façade sont par exemple des prises prévues pour recevoir des éléments de connexion débrochables de desserte d'appareils extérieurs, des organes de commande manuelle, etc.

L'articulation s'effectue ici selon un axe longitudinal de basculement de la cloche qui est par exemple celui du fond de cette cloche ou un axe parallèle, lorsque ce fond est d'allure demi-cylindrique et correspond à une partie de cylindre géométriquement définie par coupure d'un cylindre par un plan parallèle à son axe. Il est bien entendu possible de réaliser la cloche sous la forme d'un boîtier à parois rectangulaires.

Dans l'exemple envisagé, le châssis du support mobile de cloche comporte deux portées d'articulation horizontalement disposées pour recevoir chacune un des deux éléments 19 d'axe longitudinal de basculement qui sont extérieurement portés par la cloche, de part et d'autre de laquelle ils sont alignés.

Le basculement de la cloche 8 s'effectue entre deux positions limites. L'une de ces positions est celle pour laquelle la cloche a son ouverture 9 orientée vers le bas et enferme une poche d'air dans laquelle se trouvent les organes à protéger. Ceci peut notamment être obtenu lorsque la cloche a son ouverture 9 disposée horizontalement sous elle et c'est la position qui est prévue lorsque la cloche est en position basse d'escamotage. L'autre position limite est par exemple choisie pour permettre un accès le plus aisé possible des utilisateurs aux organes situés dans la cloche et plus particulièrement en façade.

Dans la réalisation présentée, cette seconde position limite est choisie horizontale ainsi qu'on le voit sur les figures 1 et 4. Elle peut être choisie oblique, notamment si l'accès à l'intérieur de l'armoire en est facilité.

Un verrouillage de la cloche 8 dans au moins l'une et éventuellement dans les deux positions limites de basculement est prévu. Il est par exemple réalisé par coopération d'un ou de plusieurs éléments de verrouillage solidaire(s) en rotation de la cloche avec un ou des éléments complémentaires solidaire(s) du support mobile 10, soit par exemple au niveau du tampon, comme représenté sur les figures ou encore au niveau du châssis. Les éléments de verrouillage solidaires de la cloche sont ici supposés être des creux ménagés extérieurement au fond de la cloche et repérés A et B sur les figures. Un élément de verrouillage 20 est ici supposé porté par le tampon 15 dans une position lui permettant de se positionner dans l'un des creux A ou B et d'assurer une immobilisation, lorsque la cloche est basculée dans l'une de ses deux positions limites.

Il est également envisagé un dispositif pour interdire l'escamotage de la cloche, depuis sa position haute, hors fosse, lorsqu'elle est basculée dans sa position d'utilisation pour laquelle son ouverture permet un accès horizontal et oblique. Cette interdiction peut être réalisée de manière simple au moyen d'au moins une tige 21 extérieurement portée par la cloche de manière à pénétrer dans la fosse lorsque la cloche a son ouverture basse et à se bloquer en haut de fosse, si la cloche n'est pas dans cette position. Dans une forme de réalisation, il est prévu une fente ménagée en bordure de l'ouverture par où la cloche entre dans la fosse, cette fente permettant le passage de la tige 21, lorsque la cloche a son ouverture en position basse du fait de son basculement et du positionnement relatif de la tige par rapport à la fente dans ces conditions, comme montré sur la figure 3. Par contre, dans toute autre position de basculement de cloche la tige 21 n'est plus correctement positionnée par rapport à la fente et elle vient en appui contre la bordure de l'ouverture en empêchant la pénétration de la cloche dans la fosse. Dans une forme préférée de réalisation, la tige 21 est disposée parallèlement à l'un des éléments 19 d'axe longitudinal de cloche en saillie vers l'extérieur. La figure 4 montre la variation de la position de la tige 21 par rapport à celle occupée par cette tige sur la figure 3, suivant le basculement de la cloche. Lorsque la cloche est escamotée et que le tampon 15 ferme l'ouverture prévue pour lui en haut de cuve, au niveau du sol, il n'est normalement pas possible d'accéder et d'utiliser les organes d'équipement 6 qui sont à l'intérieur de la cloche. Dans cette situation, ces organes sont éventuellement alimentés ou connectés par l'intermédiaire des liaisons, de type câble ou conduit 4, qui rejoignent la cloche 8 au travers de la cuve 1 qui la contient.

L'extraction manuelle ou éventuellement motorisée de la cloche hors de la cuve est réalisée préalablement à son basculement en position d'utilisation, lorsque cela est prévu. Il est alors possible à un utilisateur d'utiliser les organes jusqu'alors inutilisables que contient la cloche.

Comme indiqué plus haut, l'escamotage de la cloche est prévu par enfoncement de la cloche dans la cuve, lorsque son utilisation n'est plus demandée. Un tel enfoncement implique le plus souvent un retrait de tous les appareils ou éléments de connexion, extérieurs à la cloche, hors des prises prévues pour eux dans cette cloche et la fermeture de la porte 0.

## Revendications

1. Dispositif de protection à l'immersion pour armoire (7) de logement d'organes d'équipement (6), notamment électriques, prévue escamotable dans une fosse (2) aménagée dans le sol, depuis une position haute, hors fosse, dans lequel l'armoire comporte une ouverture (9), par rapport à laquelle les organes d'équipement à protéger sont installés en retrait ,et dans lequel cette armoire est montée sur un support mobile (10) permettant que l'ouverture soit orientée vers le bas, lorsque l'armoire est en position escamotée dans la fosse, pour enfermer une poche d'air permettant que les organes soient maintenus hors d'eau, si l'ouverture de l'armoire se trouve immergée, caractérisé en ce qu'il comporte une cloche de protection (8) qui forme ou contient le corps de l'armoire et qui est articulée sur un châssis de support, mobile en translation, pour pouvoir basculer de la position où l'ouverture de l'armoire est orientée vers le bas, lorsque le support est en une position basse pour laquelle ladite cloche est en position escamotée dans la fosse, à une position où l'ouverture de l'armoire permet un accès horizontal ou oblique aux organes, lorsque le support est en une position haute pour laquelle ladite cloche est hors de la fosse

2. Module d'équipement comportant une armoire (7) de logement d'organes (6), notamment électriques, prévue escamotable à l'intérieur d'une fosse (2) ménagée dans le sol, depuis une position haute, hors fosse, dans lequel l'armoire comporte une ouverture (9), par rapport à laquelle les organes d'équipement à protéger sont installés en retrait ,et dans lequel cette armoire est montée sur un support mobile (10) permettant que l'ouverture soit orientée vers le bas, lorsque l'armoire est en position escamotée dans la fosse, pour enfermer une poche d'air permettant que les organes soient maintenus hors d'eau, si l'ouverture de l'armoire se trouve immergée, caractérisé en ce qu'il comporte une cloche de protection (8) qui forme ou contient le corps de l'armoire et qui est articulée sur un châssis de support, mobile en translation, pour pouvoir basculer de la position où l'ouverture de l'armoire est orientée vers le bas, lorsque le support est en une position basse pour laquelle ladite cloche est en position escamotée dans la fosse, à une position où l'ouverture de l'armoire permet un accès horizontal ou oblique aux organes, lorsque le support est en une position haute pour laquelle ladite cloche est hors de la fosse

3. Module, selon la revendication 2, dans lequel le support mobile est un châssis qui se déplace au long de guides (11) verticalement disposés dans la fosse et qui porte des éléments d'articulation, définissant un axe horizontal par rapport auquel la cloche bascule, ainsi qu'un tampon (15) d'obturation de fosse positionné au-dessus de la cloche.

4. Module selon l'une des revendications 2, 3, dans lequel le montage support de cloche comporte un châssis mobile de support de cloche qui est relié à un système à contrepoids de rappel (12), logé dans la fosse pour faciliter les déplacements de la cloche entre les positions basse d'escamotage et haute hors fosse.

5. Module, selon l'une des revendications 2 à 4, dans lequel un verrouillage de la cloche dans l'une et/ou l'autre de ces deux positions de basculement est réalisé par coopération d'au moins un élément de verrouillage (A, B) qu'elle porte extérieurement avec au moins un élément complémentaire (20) solidaire du châssis ou du tampon d'obturation de fosse.

6. Module, selon l'une des revendications 2 à 5, dans lequel un verrouillage de la cloche dans l'une et/ou l'autre de ces positions basse d'escamotage et haute hors fosse est réalisé par blocage en déplacement du châssis mobile par un mécanisme à serrure (17).

7. Module selon l'une des revendications 2 à 6, dans lequel l'escamotage de la cloche à partir de la position haute hors fosse est mécaniquement bloqué lorsque la cloche est basculée dans une position autre que celle pour laquelle son ouverture est à l'horizontale et orientée vers le bas.

8. Module, selon l'une des revendications 2 à 7, dans lequel la cloche possède un fond courbe d'allure demi-cylindrique et est articulée sur le support mobile selon un axe longitudinal qui est soit celui de ce fond soit un axe parallèle à ce dernier.

9. Module, selon l'une des revendications 2 à 8, comportant une cuve (1), préférablement en composite ciment-verre, qui est dotée d'une évacuation de liquide et d'au moins une entrée de conduit ou câble, qui est destinée à être logée dans le sol pour servir de fosse d'escamotage et pour recevoir une cloche équipée, son montage support, ainsi qu'éventuellement le système à contrepoids de rappel.

10. Module selon l'une des revendications 2 à 9, dans lequel la cloche d'étanchéité est constituée sous la forme d'un boîtier à ouverture rectangulaire équipée d'une porte de fermeture (0).

11. Module, selon l'une des revendications 2 à 10, dans lequel au moins l'un des organes (6) contenus dans la cloche est une prise accessible de l'extérieur pour le raccordement direct ou par conduit ou câble d'un appareil, lorsque la cloche est positionnée hors de la fosse.
